# EUROPEAN PATENT APPLICATION

(11) **EP 1 897 920 A1**
(43) Date of publication of application: **12.03.2008**
(21) Application number: 07114640.1
(22) Date of filing: 21.08.2007
(51) Int. Cl.: C09D 11/02, B05D 5/06, C09D 5/29

(54) **Transparent Ink and Method for Printing the Same**

(30) Priority: 05.09.2006 KR 20060085123
(71) Applicant: Samsung Electronics Co., Ltd., Suwon-si, Gyeonggi-Do (KR)
(72) Inventor: KIM, Il-Jin, Gyeonggi-do (KR); PARK, Hoon-Soo, Gyeonggi-do (KR); KANG, Do-Heang, Gyeonggi-do (KR); CHOI, Sung-Nam, Gyeonggi-do (KR); SHIN, Ho-Soon, Gyeonggi-do (KR); NAM, Ho-Young, Gyeonggi-do (KR)
(74) Representative: Grünecker, Kinkeldey, Stockmair & Schwanhäusser Anwaltssozietät

(57) **Abstract**

A transparent ink (100) and a method for printing the same are provided. The transparent ink (100) is made by mixing a hardening agent and a thinner with a two-liquid type ink. The transparent ink (100) is printed on a surface of an object on which a color paint (10) is printed. The transparent ink (100) may be printed using a pad printer or a silk screen printer. The transparent ink (100) changes the refractive angle of light which is incident upon the transparent ink (100) so that the color paint (10) printed on the object represents different textures.

## Description

### BACKGROUND OF THE INVENTION

### 1. Field of the Invention:

The present invention relates to a transparent ink and a method for printing the same. More particularly, the present invention relates to a transparent ink and a method for printing the same, wherein the transparent ink is printed on a surface of an object to represent different textures and different external glosses using the refractive index of light, without changing the color of the object.

### 2. Description of the Related Art:

Molded plastic products are commonplace in everyday life. Some examples of molded plastic products are caps for cosmetic containers, cases for portable terminals, vehicle chassis, electronic components, and the like.

Molded plastic products typically have lower durability and hardness than products made of glass or metal. Thus, molded plastic products may be more susceptible to damage and degradation over the life of the product. To prevent damage and to improve the hardness and gloss of the surface of a plastic-molded product, various surface treatments have been developed. These surface treatments include such processes as painting, low-temperature burning, ultraviolet hardening, and the like.

Different paints are used with different types of plastics because different plastics have different material characteristics, such as different glass-transition temperatures, different organic solvent solvency, and the like. The types of paint suitable for use with each particular type of plastic material are limited. This impacts manufacturing productivity and limits flexibility with respect to the paint.

One method of painting molded plastic parts forms two layers of paint, a lower layer and an upper layer. To form the lower paint layer, paint is applied to a molded plastic part to coat the plastic material. Then, an ultraviolet curable paint is applied to the lower paint layer to form the upper paint layer.

Typically, the ultraviolet curable paint is clear, in other words, optically transparent.

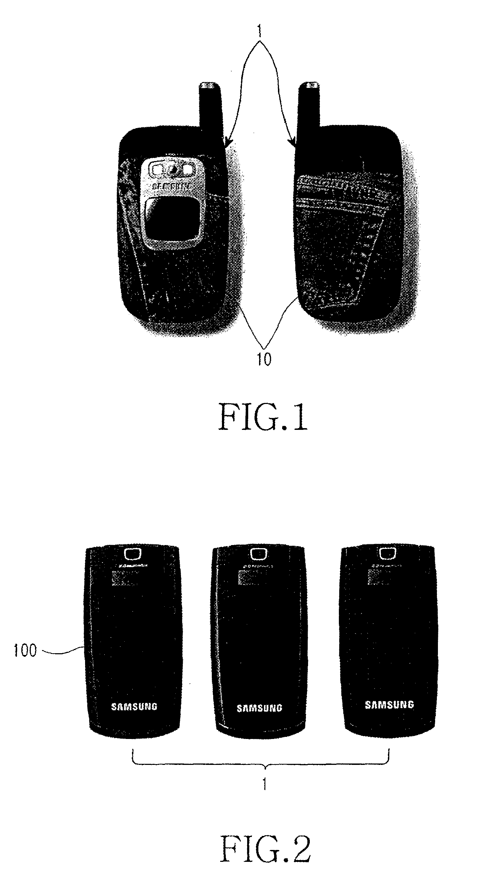

FIG. 1 illustrates a portable terminal with paint 10 on the surface of the case 1. As shown here, the paint 10 typically includes both transparent and color paints.

Color paint is used to form images or create textures on the surface of the case. Alternatively, images or textures may be formed by other conventional methods, such as laser cutting or image transfer.

In a conventional printing method, only one color at a time is printed on the surface of the plastic product using a metal plate. This makes it difficult to produce a variety of images and textures. Further, small differences in color may occur when only one color is printed on the products. Finally, conventional printing methods require a long time to develop which creates problems in a mass-production environment.

### SUMMARY OF THE INVENTION

Accordingly, the present invention has been made to address the above-mentioned problems and/or disadvantages, and an object of the present invention is to provide a transparent ink and a method for printing the same on a surface of an object to represent different textures and different external glosses by using a refractive index of light, without changing the color of the object.

In accordance with an aspect of the present invention, a transparent ink is manufactured by mixing a hardening agent and a thinner with a two-liquid type transparent ink. The transparent ink is printed on the surface of an object, on which a color paint is printed, using a pad printer or a silk screen printer. The refractive angle of light which is incident upon the transparent ink is changed to allow the color paint, which is printed on the object, to represent different textures.

In accordance with another aspect of the present invention, a method for printing transparent ink is provided. The method comprises preparing a two-liquid type ink, manufacturing a transparent ink by mixing a hardening agent and a thinner with the two-liquid type ink, printing the transparent ink on the surface of an object on which a color paint is printed, and drying the surface of the object at an elevated temperature.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 illustrates a conventional portable terminal, in which the case of the portable terminal is coated with color paint;
FIG. 2 illustrates a portable terminal according to an exemplary embodiment of the present invention, in which transparent ink providing various textures is printed on the case of the portable terminal;
FIG. 3 illustrates a portable terminal according to another exemplary embodiment of the present invention, in which transparent ink providing various textures is printed on the case of the portable terminal;
FIG. 4 is a schematic sectional view of transparent paint printed on the case of the portable terminal; and
FIG. 5 is a flowchart of a method of printing transparent ink to provide various textures according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Referring to FIGS. 2-4, in exemplary embodiments of the present invention, a case 1 for a portable terminal is coated with a transparent ink 100. Initially, a two-liquid type ink is prepared. Next, a hardening agent and a thinner are mixed with the two-liquid type ink to create a transparent ink 100.

Then, the transparent ink 100 is coated on the surface of the case 1 for the portable terminal, on which color paint 10 is printed. The transparent ink may be coated on the case 1 by a pad printer or a silk screen printer (not shown).

After the transparent ink 100 is printed on the surface of the case 1, the transparent ink is dried at an elevated temperature.

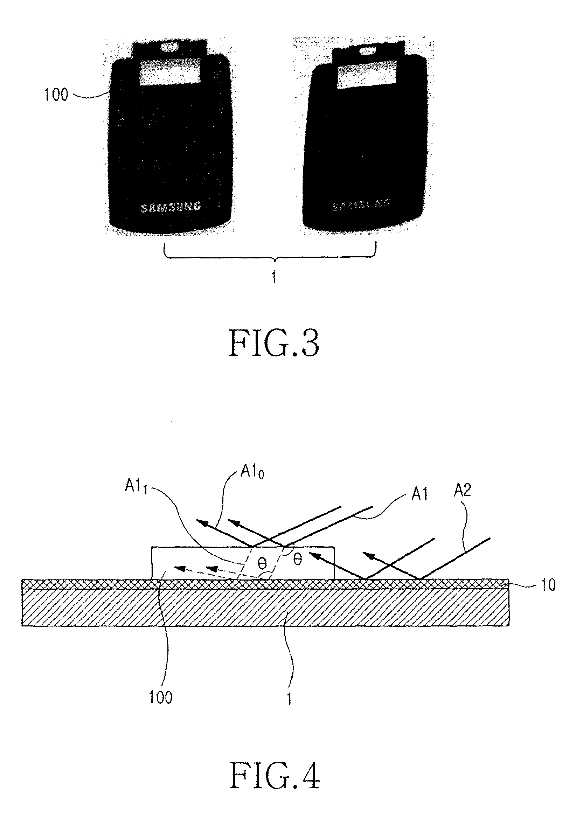

As shown in FIG. 4, when light A1 is incident upon the transparent ink 100 which has been printed on the case 1 of the portable terminal, a portion A1₀ of the light is reflected and a portion A1₁ of the light is transmitted into the transparent ink 100. With respect to the portion of the light that is transmitted into the transparent ink, the refractive angle θ of the incident light A1 is changed by the transparent ink 100 so that the case 1 of the portable terminal represents various textures. Since the representation of various textures is caused by the transparent ink 100, it is possible to produce various textures in the color paint 10 printed on the case 1 of the portable terminal.

On the other hand, when incident light A2 falls upon surfaces which have not been printed with transparent ink 100, the light A2 is reflected normally. Accordingly, these surfaces do not appear to have a texture.

Until now, the size and therefore the surface area, of a case 1 of a portable terminal has tended to be large. Even with a large surface area, the above-described method allows various images and textures to be produced at a low cost.

The two-liquid type ink may comprise an acryl resin, and the color paint 10 may comprise semi-transparent ink.

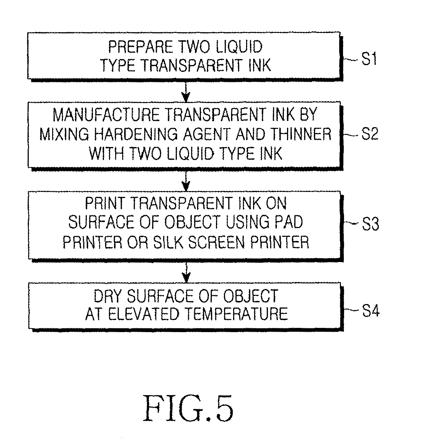

A method of printing a transparent ink according to an exemplary embodiment of the present invention will now be described in greater detail with reference to FIG. 5.

As shown in FIG. 5, a two-liquid type ink is prepared in step S1.

Then, in step S2, the transparent ink 100 is manufactured by mixing a hardening agent and a thinner with the two-liquid type ink.

The two-liquid type ink (not shown) may comprise an acryl resin.

After the transparent ink 100 has been manufactured, the transparent ink 100 is printed on the surface of the case 1 of the portable terminal, on which the color paint 10 is printed, in step S3. The transparent ink 100 may be printed by using a pad printer or a silk screen printer.

The color paint 10 may be a transparent paint.

The surface of the case 1 for the portable terminal is dried at an elevated temperature in step S4. The drying process may be a continuous process.

In this state, the refractive angle θ of the light A1 which is incident upon the transparent ink 100 is changed. Therefore, it is possible to form different images and textures of the color paint 10 which is printed on the case 1 of the portable terminal.

As described above, a transparent ink is printed on a surface of a case of the portable terminal. This produces the representation of different textures by using the refractive index of light and creates different external glosses for the case without changing the color of the case.

The present invention can be applied to all kinds of portable terminals.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for printing transparent ink (100), the method comprising the steps of:
preparing a two-liquid type ink;
manufacturing a transparent ink (100) by mixing a hardening agent and a thinner with the two-liquid type ink;
printing the transparent ink (100) on a surface of an object on which a color paint (10) is printed; and
drying the surface of the object.

2. The method as claimed in claim 1, wherein the transparent ink (100) is printed by a pad printer.

3. The method as claimed in claim 1 or 2, wherein the transparent ink (100) is printed by a silk screen printer.

4. The method as claimed in any one of claims 1 to 3, wherein the surface of the object is dried at an elevated temperature.

5. The method as claimed in any one of claims 1 to 4, wherein the object comprises a case (1) of a portable terminal.

6. The method as claimed in claim 5, wherein the case (1) of the portable terminal comprises a window.

7. The method as claimed in any one of claims 1 to 6, wherein the two-liquid type ink comprises an acryl resin.

8. The method as claimed in any one of claims 1 to 7, wherein the color paint (10) comprises a semi-transparent paint.

9. The method as claimed in any one of claims 1 to 8, wherein when light is incident upon the surface of the object, the refractive angle of the light which is incident upon the transparent ink (100) is changed so that the color paint (10) represents different textures.

10. A transparent ink (100) manufactured by mixing a hardening agent and a thinner with two-liquid type transparent ink (100) and printed on the surface of an object, on which a color paint (10) is printed, wherein the refractive angle of light which is incident upon the transparent ink (100) is changed so that the color paint (10) printed on the object represents different textures.

11. The transparent ink (100) as claimed in claim 10, wherein the transparent paint is printed by at least one of a pad printer and a silk screen printer.

12. The transparent ink (100) as claimed in claim 10 or 11, wherein the object comprises a case (1) of a portable terminal.

13. The transparent ink (100) as claimed in claim 12, wherein the case (1) of the portable terminal comprises a window.

14. The transparent ink (100) as claimed in any one of claims 10 to 13, wherein the two-liquid type ink comprises an acryl resin.

15. The transparent ink (100) as claimed in any one of claims 10 to 14, wherein the color paint (10) comprises a semi-transparent ink.

16. A plastic part having a coated surface, comprising:
a plastic part having a color paint (10) on a surface of the plastic part; and
a transparent ink (100) according to any one of claims 10 to 15 coated on the color paint (10), the transparent ink (100) comprising a two-liquid type paint mixed with a hardening agent and a thinner.

17. The plastic part as claimed in claim 16, wherein the plastic part comprises a case (1) of a portable terminal.

18. The plastic part as claimed in claim 17, wherein the case (1) of the portable terminal comprises a window.

19. The plastic part as claimed in any one of claims 16 to 18, wherein the two-liquid type ink comprises an acryl resin.

20. The plastic part as claimed in any one of claims 16 to 19, wherein the color paint (10) comprises a semi-transparent ink.
